# EUROPEAN PATENT APPLICATION

(11) **EP 4 319 073 A1**
(43) Date of publication of application: **07.02.2024**
(21) Application number: 22778465.9
(22) Date of filing: 04.03.2022
(51) Int. Cl.: H04L 25/08, H04L 25/03, H04W 16/14

(54) **INTERFERENCE COORDINATION PROCESSING METHOD AND APPARATUS, ELECTRONIC DEVICE, AND STORAGE MEDIUM**

(30) Priority: 02.04.2021 CN 202110363752
(71) Applicant: Datang Mobile Communications Equipment Co., Ltd., Beijing 100085 (CN)
(72) Inventor: LI, Chuanjun, Beijing 100085 (CN); SONG, Yuexia, Beijing 100085 (CN); GAO, Yuan, Beijing 100085 (CN)
(74) Representative: Studio Torta S.p.A.
(86) International application number: PCT/CN2022/079262
(87) International publication number: WO 2022/206281

(57) **Abstract**

Embodiments of the present disclosure provide an interference coordination processing method and apparatus, an electronic device, and a storage medium. The interference coordination processing method comprises: determining whether there is interference of a long term evolution (LTE) cell-specific reference signal (CRS) in a neighboring cell; and if it is determined that there is interference of the LTE CRS in the neighboring cell, according to whether there is LTE CRS interference coordination capability, determining whether LTE CRS interference coordination can be performed, and if there is LTE CRS interference coordination capability, performing the LTE CRS interference coordination. The embodiments of the present disclosure can well solve the problem of LTE CRS interference coordination, and also avoid excessive resource consumption caused by unnecessary LTE CRS interference coordination performed by an NR UE when there is no interference of an LTE CRS in a neighboring cell. In addition, the UE can also determine, according to its own capability, whether the LTE CRS interference coordination can be performed.

## Description

### CROSS-REFERENCE TO RELATED APPLICATION

The present application claims priority to Chinese patent application No. 2021103637524, filed on April 02, 2021, entitled "Interference Coordination Processing Method and Apparatus, Electronic Device, and Storage Medium", which is hereby incorporated by reference in its entirety.

### FIELD

The present application relates to the field of communication, and in particular to interference mitigation (IM) methods and apparatuses, an electronic device, and a storage medium.

### BACKGROUND

In a long term evolution (LTE) and new radio (NR) coexistence network with dynamic spectrum sharing (DSS) or in an LTE and NR coexistence network with spectrum overlap, in case that a neighboring cell for the NR system is in the LTE system, since the cell-specific reference signal (CRS) in the LTE system is a reference signal at a cell level, the CRS always exists and is configured within bandwidth whether a physical downlink shared channel (PDSCH) is scheduled or not scheduled in the neighboring cell. In case that spectra of the NR serving cell and the LTE neighboring cell overlap, it causes a decrease in the PDSCH performance for an NR user equipment (UE) in the serving cell.

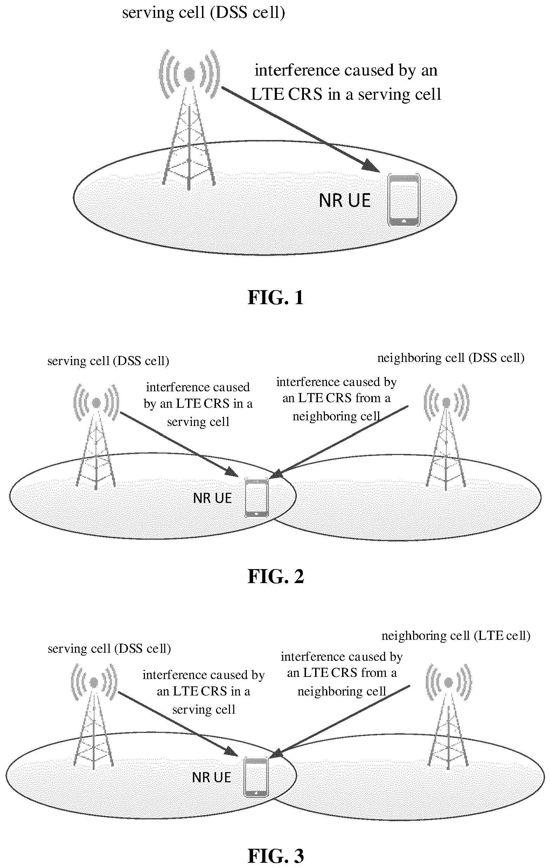

At present, as shown in FIG. 1, in an NR system, only an interference mitigation (IM) caused by LTE CRS in the serving cell to the NR UE in the serving cell is considered, a rate matching mode is used to avoid transmitting NR PDSCH data over resource elements (REs) used by the LTE CRS in the serving cell to the NR UE, thereby avoiding an interference from the LTE CRS in the serving cell to the NR UE.

However, there is no solution to an IM caused by LTE CRS from the neighboring cell to the NR UE in the serving cell.

### SUMMARY

Embodiments of the present application provides interference mitigation (IM) methods and apparatuses, an electronic device, and a storage medium, to solve related issues of IM caused by the LTE CRS from the neighboring cell to the NR UE in the serving cell.

Embodiments of the present application provide the following solutions.

An embodiment of the present application provides an interference mitigation (IM) method, including:
determining whether an interference caused by a long term evolution (LTE) cell-specific reference signal (CRS) from a neighboring cell exists;
in case that the interference caused by the LTE CRS from the neighboring cell exists, determining whether the NR UE is able to perform LTE CRS-IM based on whether the NR UE has a capability for LTE CRS-IM; and
in case that the NR UE has the capability for LTE CRS-IM, performing LTE CRS-IM.

In an embodiment, the determining whether the interference caused by the LTE CRS from the neighboring cell exists includes:
determining whether LTE CRS-IM signaling is received; and
in case that the LTE CRS-IM signaling is received, determining that the interference caused by the LTE CRS from the neighboring cell exists,
where the LTE CRS-IM signaling is signaling transmitted from a base station to notify the NR UE of the existence of LTE CRS interference.

In an embodiment, the LTE CRS-IM signaling includes:
first signaling used to indicate that the interference caused by the LTE CRS from the neighboring cell exists, where the first signaling includes one or more of the followings: radio resource control (RRC) signaling, medium access control-control element (MAC-CE) signaling and downlink control information (DCI) signaling;
   or,
second signaling used to indicate parameters required for performing LTE CRS-IM, where the second signaling includes RRC signaling.

In an embodiment, the performing LTE CRS-IM includes:
obtaining parameters required for performing LTE CRS-IM;
reconstructing, based on the parameters required for performing for LTE CRS-IM, CRS antenna port signal for each CRS antenna port; and
cancelling an interference caused by each CRS antenna port signal from a received physical downlink shared channel (PDSCH) based on a time domain position and a frequency domain position of each CRS antenna port and the CRS antenna port signal for each CRS antenna port.

In an embodiment, the obtaining parameters required for performing LTE CRS-IM includes:
receiving the first signaling used to indicate that the interference caused by the LTE CRS from the neighboring cell exists, and obtaining, by using blind detection, the parameters required for performing LTE CRS-IM from an LTE broadcast signal from the neighboring cell;
receiving the first signaling used to indicate that the interference caused by the LTE CRS from the neighboring cell exists, and obtaining the parameters required for performing LTE CRS-IM from lte-CRS-PatternList1 and/or lte-CRS-PatternList2 in ServingCellConfig signaling; and
receiving the second signaling used to indicate the parameters required for performing LTE CRS-IM, and obtaining the parameters for LTE CRS-IM from the LTE CRS-IM signaling.

In an embodiment, the parameters required for performing LTE CRS-IM include one or more of the followings:
an LTE downlink carrier bandwidth, an LTE carrier center frequency, a physical cell ID of a neighboring interfering cell, the number of CRS antenna ports, a multicast/broadcast single frequency network (MBSFN) configuration, a v-shift.

In an embodiment, after the performing LTE CRS-IM, the method further includes:
receiving a physical downlink shared channel (PDSCH).

In an embodiment, the IM method further includes:
receiving the PDSCH in case that the NR UE is unable to perform LTE CRS-IM.

In an embodiment, the IM method further includes:
receiving a PDSCH in case that the interference caused by the LTE CRS from the neighboring cell does not exist.

In an embodiment, the IM method further includes:
reporting to a base station that whether the NR UE has the capability for LTE CRS-IM.

An embodiment of the present application further provides an interference mitigation (IM) method applied to a base station, including:
determining whether an interference caused by a long term evolution (LTE) cell-specific reference signal (CRS) from a neighboring cell to a new radio (NR) user equipment (UE) exists; and
in case that the interference caused by the LTE CRS from the neighboring cell to the NR UE exists, transmitting LTE CRS-IM signaling to the NR UE to notify the NR UE of an existence of LTE CRS interference,
where after the NR UE receives the LTE CRS-IM signaling, the NR UE determines, based on whether the NR UE has a capability for LTE CRS-IM, whether the NR UE is able to perform LTE CRS-IM, and in case that the NR UE has the capability for LTE CRS-IM, the NR UE performs LTE CRS-IM.

In an embodiment, the determining whether the interference caused by the LTE CRS from the neighboring cell to the NR UE exists, includes:
determining whether the NR UE meets any one of the following three conditions, and in case that the NR UE meets any one of the following three conditions, determining that the interference caused by the LTE CRS from the neighboring cell to the NR UE exists:
condition 1: a serving cell of the NR UE is a dynamic spectrum sharing (DSS) cell, and a neighboring cell of the NR UE is a DSS cell;
condition 2: a serving cell of the NR UE is a DSS cell, and a neighboring cell of the NR UE is an LTE cell; and
condition 3: a serving cell of the NR UE is an NR cell, and a neighboring cell of the NR UE is an LTE cell.

An embodiment of the present application further provides an interference mitigation (IM) apparatus applied to a new radio (NR) user equipment (UE), including:
a determination module, used for determining whether an interference caused by a long term evolution (LTE) cell-specific reference signal (CRS) from a neighboring cell exists; and
a mitigating module, used for determining, in case that the interference caused by the LTE CRS from the neighboring cell exists, whether the NR UE is able to perform LTE CRS-IM based on whether the NR UE has a capability for LTE CRS-IM, and performing LTE CRS-IM in case that the NR UE has the capability for LTE CRS-IM.

In an embodiment, the determining module is specifically used for:
determining whether LTE CRS-IM signaling is received; and
in case that the LTE CRS-IM signaling is received, determining that the interference caused by the LTE CRS from the neighboring cell exists,
where the LTE CRS-IM signaling is signaling transmitted from the base station to notify the NR UE of the existence of LTE CRS interference.

In an embodiment, the LTE CRS-IM signaling includes:
first signaling used to indicate that the interference caused by the LTE CRS from the neighboring cell exists, where the first signaling includes one or more of the followings: radio resource control (RRC) signaling, medium access control-control element (MAC-CE) signaling and downlink control information (DCI) signaling;
   or,
second signaling used to indicate parameters required for performing LTE CRS-IM, where the second signaling includes RRC signaling.

In an embodiment, the mitigating module, when performing LTE CRS-IM, is specifically used for:
obtaining parameters required for performing LTE CRS-IM;
reconstructing, based on the parameters required for performing LTE CRS-IM, CRS antenna port signal for each CRS antenna port; and
cancelling an interference caused by each CRS antenna port signal from a received physical downlink shared channel (PDSCH) based on a time domain position and a frequency domain position of each CRS antenna port and the CRS antenna port signal for each CRS antenna port.

In an embodiment, the mitigating module, when obtaining the parameters required for performing LTE CRS-IM, is specifically used for:
receiving the first signaling used to indicate that the interference caused by the LTE CRS from the neighboring cell exists, and obtaining, by using blind detection, the parameters required for performing LTE CRS-IM from an LTE broadcast signal from the neighboring cell;
receiving the first signaling used to indicate that the interference caused by the LTE CRS from the neighboring cell exists, and obtaining the parameters required for performing LTE CRS-IM from lte-CRS-PatternList1 and/or lte-CRS-PatternList2 in ServingCellConfig signaling; and
receiving the second signaling used to indicate the parameters required for performing LTE CRS-IM, and obtaining the parameters for LTE CRS-IM from the LTE CRS-IM signaling.

An embodiment of the present application further provides an interference mitigation (IM) apparatus applied to a base station, including:
a notification module, used for determining whether an interference caused by a long term evolution (LTE) cell-specific reference signal (CRS) from a neighboring cell to a new radio (NR) user equipment (UE) exists, and in case that the interference caused by the LTE CRS from the neighboring cell to the NR UE exists, transmitting LTE CRS-IM signaling to the NR UE to notify the NR UE of an existence of LTE CRS interference,
where after the NR UE receives the LTE CRS-IM signaling, the NR UE determines, based on whether the NR UE has a capability for LTE CRS-IM, whether the NR UE is able to perform LTE CRS-IM, and in case that the NR UE has the capability for LTE CRS-IM, the NR UE performs LTE CRS-IM.

In an embodiment, the notification module, when determining whether the interference caused by the LTE CRS from the neighboring cell to the NR UE exists, is specifically used for:
determining whether the NR UE meets any one of the following three conditions, and in case that the NR UE meets any one of the following three conditions, determining that the interference caused by the LTE CRS from the neighboring cell exists:
condition 1: a serving cell of the NR UE is a dynamic spectrum sharing (DSS) cell, and a neighboring cell of the NR UE is a DSS cell;
condition 2: a serving cell of the NR UE is a DSS cell, and a neighboring cell of the NR UE is an LTE cell; and
condition 3: a serving cell of the NR UE is an NR cell, and a neighboring cell of the NR UE is an LTE cell.

An embodiment of the present application further provides an electronic device, including a memory storing computer programs, and a processor, where the computer programs, when executed by the processor, cause the electronic device to perform any one of the interference mitigation (IM) methods according to the embodiments of the present application.

An embodiment of the present application further provides a processor readable storage medium, and the processor readable storage medium stores a computer program, and the computer program, when executed by a processor, causes the processor to perform any one of the interference (IM) methods according to the embodiments of the present application.

Embodiments of the present application provide IM methods and apparatuses, an electronic device, and a storage medium, applied to the NR UE or the base station. The method applied to the NR UE includes: determining whether the interference caused by the LTE CRS from the neighboring cell exists; and in case that the interference caused by the LTE CRS from the neighboring cell exists, determining whether the NR UE is able to perform LTE CRS-IM based on whether the NR UE has the capability for LTE CRS-IM, and in case that the NR UE has the capability for LTE CRS-IM, performing the LTE CRS-IM. The embodiments of the present application may effectively solve the related issues of LTE CRS-IM, and also avoid excessive resource consumption caused by unnecessary LTE CRS-IM performed by the NR UE when there is no interference caused by the LTE CRS from the neighboring cell. In addition, the UE may determine, based on its own capability, whether the UE is able to perform LTE CRS-IM.

### BRIEF DESCRIPTION OF THE DRAWINGS

In order to illustrate the solutions in the embodiments of the present application or the related art, the accompanying drawings to be used in the descriptions of the embodiments or the related art are briefly described below. It should be noted that the accompanying drawings in the following description are some embodiments of the present application, and other drawings may be obtained according to these drawings without creative work for those ordinary skilled in the art.
FIG. 1 is a schematic diagram of an interference caused by a long term evolution (LTE) cell-specific reference signal (CRS) in a serving cell for a new radio (NR) user equipment (UE) in the serving cell;
FIG. 2 is a schematic diagram of an interference caused by an LTE CRS from a dynamic spectrum sharing (DSS) neighboring cell for an NR UE in a DSS serving cell according to an embodiment of the present application;
FIG. 3 is a schematic diagram of an interference caused by an LTE CRS from an LTE neighboring cell for an NR UE in a DSS serving cell according to an embodiment of the present application;
FIG. 4 is a schematic diagram of an interference caused by an LTE CRS from an LTE neighboring cell for an NR UE in an NR serving cell according to an embodiment of the present application;
FIG. 5 is a schematic diagram of an NR UE in an NR serving cell not being interfered by LTE CRS according to an embodiment of the present application, where a neighboring cell of the NR serving cell is an NR cell;
FIG. 6 is a schematic flowchart of an interference mitigation (IM) method applied to an NR LTE according to an embodiment of the present application;
FIG. 7 is a schematic flowchart of an interference mitigation (IM) method applied to a base station according to an embodiment of the present application;
FIG. 8 is a schematic flowchart of interference mitigation (IM) caused by LTE CRS for an NR LTE according to an embodiment of the present application;
FIG. 9 is a schematic structural diagram of an interference mitigation (IM) apparatus applied to an NR LTE according to an embodiment of the present application;
FIG. 10 is a schematic structural diagram of an interference mitigation (IM) apparatus applied to a base station according to an embodiment of the present application; and
FIG. 11 is a schematic structural diagram of an electronic device according to an embodiment of the present application.

### DETAILED DESCRIPTION

The solutions in the embodiments of the present application are described below in conjunction with the accompanying drawings in the embodiments of the present application. It should be noted that the described embodiments are only a part of the embodiments of the present application, and not all of them. Based on the embodiments in the present application, all the other embodiments obtained by a person of ordinary skill in the art without creative labor are within the protection scope of the present application.

As described in the background, in a long term evolution (LTE) and new radio (NR) coexistence network with dynamic spectrum sharing (DSS) or in an LTE and NR coexistence network with spectrum overlap, in case that a neighboring cell for the NR system is in the LTE system, since the cell-specific reference signal (CRS) in the LTE system is a reference signal at a cell level, the CRS always exists and is configured within bandwidth whether physical downlink shared channel (PDSCH) is scheduled or not scheduled in the neighboring cell. In case that spectra of the NR serving cell and the LTE neighboring cell overlaps, it causes a decrease in the PDSCH performance for an NR user equipment (UE) in the serving cell.

At present, as shown in FIG. 1, in an NR system, only an interference mitigation (IM) caused by LTE CRS in the serving cell to the NR UE in the serving cell is considered, a rate matching mode is used to avoid transmitting NR PDSCH data on resource elements (REs) used by the LTE CRS in the serving cell to the NR UE, thereby avoiding an interference from the LTE CRS in the serving cell to the NR UE.

However, there is no solution to an IM caused by LTE CRS from the neighboring cell to the NR UE in the serving cell.

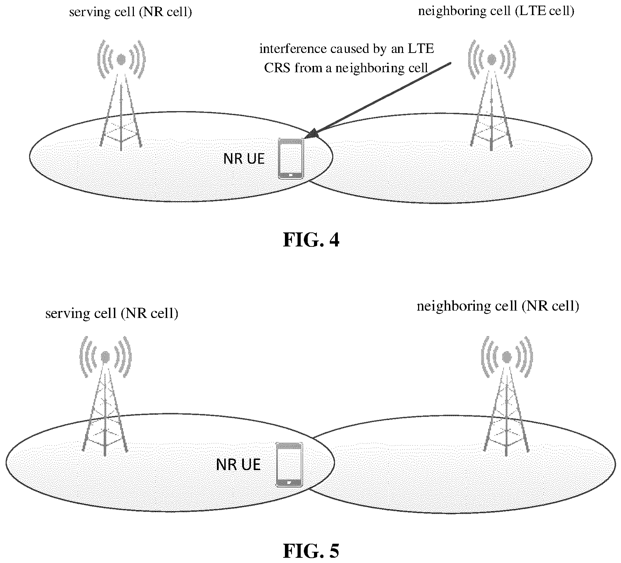

It should be noted that, as shown in FIG. 2, FIG. 3, FIG. 4 and FIG. 5, for the LTE and NR coexistence network with DSS or the LTE and NR coexistence network with spectrum overlap, an NR UE may be located in the following four possible coexistence networks:
as shown in FIG. 2, a serving cell of the NR UE is a DSS cell, and a neighboring cell of the NR UE is also a DSS cell, where the NR UE is interfered by the LTE CRS from the neighboring cell;
as shown in FIG. 3, a serving cell of the NR UE is a DSS cell, and a neighboring cell of the NR UE is an LTE cell, where the NR UE is interfered by the LTE CRS from the neighboring cell;
as shown in FIG. 4, a serving cell of the NR UE is an NR cell, and a neighboring cell of the NR UE is an LTE cell, where the NR UE is interfered by the LTE CRS from the neighboring cell; and
as shown in FIG. 5, a serving cell of the NR UE is an NR cell, and a neighboring cell of the NR UE is also an NR cell, where the NR UE is not interfered by the LTE CRS.

In order to avoid an interference between an NR PDSCH and an LTE CRS, several CRS patterns may be configured, and the PDSCH performs rate matching on the configured CRS. In case that the rate matching is used for the LTE CRS from the neighboring cell, it results in a decrease in the resource elements for PDSCH of NR UE, and its throughput is affected. Embodiments of the present application provide an IM (cancellation) method for LTE CRS applied to UE side, which may be used to avoid the interference caused by the LTE CRS from the neighboring cell for the NR UE in the serving cell. For an NR UE, it may be interfered by the LTE CRS from the neighboring cell, as shown in FIG. 2, FIG. 3 and FIG. 4, or it may be not interfered by the LTE CRS, as shown in FIG. 5. Therefore, in order to solve the problem of interference caused by the LTE CRS from the neighboring cell, not only the presence of LTE CRS interference, but also the absence of LTE CRS interference must be considered, so as to avoid excessive resource consumption caused by unnecessary LTE CRS-IM performed by the NR UE when there is no LTE CRS interference.

In response to the problems in the related art, embodiments of the present application provide a solution, in which an NR UE receives LTE CRS-IM signaling, and the UE determines, based on the IM signaling, whether an interference caused by an LTE CRS from a neighboring cell exists. In case that the interference caused by the LTE CRS from the neighboring cell exists, the NR UE determines, based on an NR UE capability, whether the NR UE is able to perform LTE CRS-IM (or interference cancellation). In case that the NR UE is able to perform LTE CRS-IM (or interference cancellation), the NR UE performs the LTE CRS-IM; and in case that the NR UE is unable to perform the LTE CRS-IM, the NR UE does not perform the LTE CRS-IM. In addition, in case that it is determined that the interference caused by the LTE CRS from the neighboring cell doesn't exist, the LTE CRS-IM is not performed. It should be noted that the solution provided in the embodiments of the present application may effectively solve the related issues of LTE CRS-IM, and also avoid excessive resource consumption caused by unnecessary LTE CRS-IM performed by the NR UE when interference caused by the LTE CRS from the neighboring cell does not exist. In addition, the UE may determine, based on its own capability, whether the UE is able to perform LTE CRS-IM. Detailed description of the solutions is provided by the present application through specific embodiments in the following.

It should be noted that in the following description, since the methods and the apparatuses are based on the same conception, and the principles of the methods and the apparatuses to solve the problems are similar, the implementation of the apparatuses and methods may be referred to each other, and the similar part is not repeated.

It should be noted that the solutions according to the embodiments of the present application may be applicable to various systems, for example, 5G systems. For example, the applicable systems may be a global system of mobile communication (GSM) system, a code division multiple access (CDMA) system, a wideband code division multiple access (WCDMA) general packet radio service (GPRS) system, a long term evolution (LTE) system, an LTE frequency division duplex (FDD) system, an LTE time division duplex (TDD) system, a long term evolution advanced (LTE-A) system, a universal mobile telecommunication system (UMTS), a worldwide interoperability for microwave access (WiMAX) system, a 5G new radio (NR) system, etc. These various systems include a terminal device and a network device, and may further include a core network part, such as an evolved packet system (EPS), a 5G system (5GS), and the like.

The terminal device in the embodiments of the present application may be a device that provides voice and/or data connectivity to a user, a handheld device with a wireless connection function, or other processing devices connected to a wireless modem. In different systems, the names of the terminal may be different. For example, in the 5G system, the terminal may be called as a user equipment (UE). A wireless terminal device may communicate with one or more core networks (CN)s via a radio access network (RAN), and the wireless terminal may be a mobile terminal device, such as a mobile phone (or cellular phone) and a computer with mobile terminal device, e.g., a portable mobile device, a pocket-sized mobile device, a handheld mobile device, a computer-built mobile device or a vehicle-mounted mobile device, which exchange language and/or data with the radio access network. For example, a personal communication service (PCS) phone, a radio phone, a session initiated protocol (SIP) phone, a wireless local loop (WLL) station, a personal digital assistant (PDA) and other devices. A wireless terminal device may also be called a system, a subscriber unit, a subscriber station, a mobile station, a mobile platform, a remote station, an access point, a remote terminal, an access terminal, a user terminal, a user agent, or a user device, which is not limited in the embodiments of the present application. Since the terminal device and other network devices (such as a core network device, an access network device (i.e. a network side device)) together form a network being able to support communication, the terminal device may be regarded as a network device in the present application.

The network device in the embodiments of the present application may be a base station, and the base station may include multiple cells providing services for the terminal; and the network device may also be a centralized unit (CU) or a distributed unit (DU). Depending on the specific scenario, the network device may be called an access point, or a device communicating with a wireless terminal device through one or more sectors on the air interface in the access network, or other names. The network device may be used for exchanging received air frames with internet protocol (IP) packets, and acting as a router between the wireless terminal device and the rest of the access network, where the rest of the access network may include an IP communication network. The network device may also mitigate attribute management for the air interface. For example, the network device in the embodiments of the present application may be a base transceiver station (BTS) in a global system for mobile communications (GSM) or a code division multiple access (CDMA), or may be a node B in a wide-band code division multiple access (WCDMA), or may be an evolutional node B (eNB or e-Node B) in a long term evolution (LTE) system, or may be a 5G gNB in 5G network architecture (next generation system), or may be a home evolved node B (HeNB), a relay node, a femto, or a pico, etc., which is not limited in the embodiments of the present application. In some network structures, the network device may include a centralized unit (CU) node and a distributed unit (DU) node, and the centralized unit and the distributed unit may be geographically separated.

In addition, it should be understood that the term "and/or" in the embodiments of the present application describes the association relationship of the associated objects, indicating that three types of relationships may exist, for example, A and/or B, which may indicate the following three cases: A alone, both A and B, and B alone. The character "j" generally indicates that the associated objects before and after is an "or" relationship.

The reference to "an embodiment" or "one embodiment" throughout the specification means that specific features, structures, or characteristics related to the embodiment are included in at least one embodiment of the present application. Therefore, the words "in an embodiment" or "in one embodiment" appearing throughout the entire specification may not necessarily refer to the same embodiment. In addition, these specific features, structures, or characteristics may be combined in one or more embodiments in any suitable manner.

The present application is specifically described in the following.

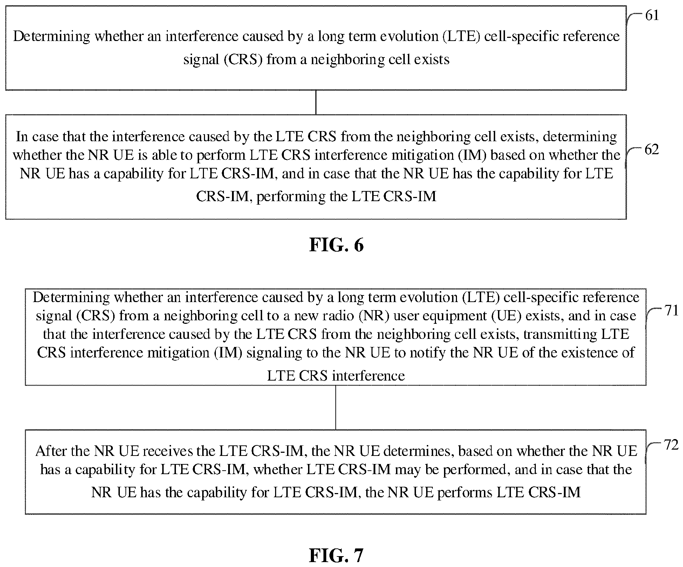

FIG. 6 is a schematic flowchart of an interference mitigation (IM) method applied to a new radio (NR) user equipment (UE) according to an embodiment of the present application. As shown in FIG. 6, the IM method includes the following steps:
step 61: determining whether an interference caused by a long term evolution (LTE) cell-specific reference signal (CRS) from a neighboring cell exists; and
step 62: in case that the interference caused by the LTE CRS from the neighboring cell exists, determining whether the NR UE is able to perform LTE CRS-IM based on whether the NR UE has a capability for LTE CRS-IM, and in case that the NR UE has the capability for LTE CRS-IM, performing the LTE CRS-IM.

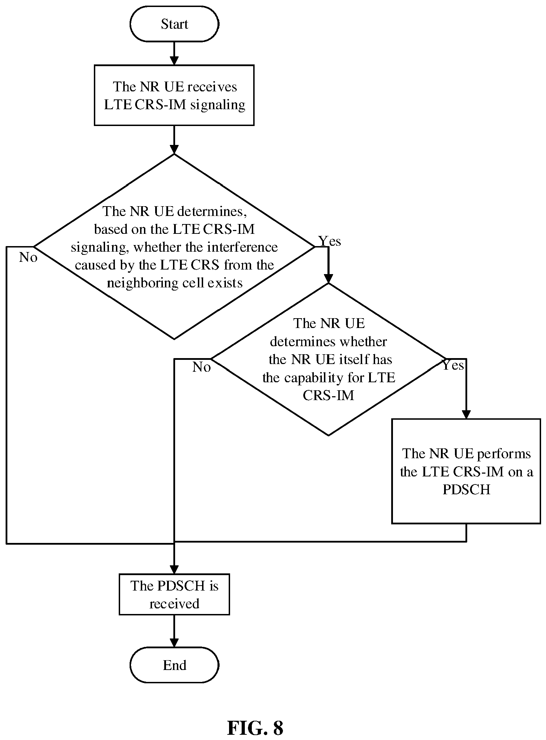

In an embodiment, as shown in FIG. 8, the NR UE determines whether to perform LTE CRS-IM based on whether the interference caused by the LTE CRS from the neighboring cell exists and whether the NR UE has the capability for LTE CRS-IM. The following is a detailed illustration for the implementation of the LTE CRS-IM scheme in conjunction with FIG. 8.

Step 1: the NR UE receives LTE CRS-IM signaling. The signaling may be radio resource control (RRC) signaling, medium access control-control element (MAC-CE) signaling, downlink control information (DCI) signaling, or a combination thereof.

The LTE CRS-IM signaling may be signaling that only used to notify the NR UE of the existence of LTE CRS interference, or may be signaling that includes specific parameters for LTE CRS-IM.

Step 2: the NR UE determines, based on whether the LTE CRS-IM signaling is received, whether the interference caused by the LTE CRS from the neighboring cell exists. In case that the NR UE receives the LTE CRS-IM signaling, it is indicated that the interference caused by the LTE CRS from the neighboring cell exists; and in case that the NR UE does not receive the LTE CRS-IM signaling, it is indicated that the interference caused by the LTE CRS from the neighboring cell does not exist.

In case that the interference caused by the LTE CRS from the neighboring cell exists, the NR UE determines whether the NR UE itself has the capability for LTE CRS-IM (or CRS interference cancellation). In case that the NR UE has the capability for LTE CRS-IM, the NR UE performs the LTE CRS-IM (or CRS interference cancellation) on PDSCH. After the LTE CRS-IM is performed, PDSCH is directly received.

In an embodiment, the IM scheme for LTE CRS from the neighboring cell may be as follows.
A: obtaining specific parameters for LTE CRS-IM.
B: reconstructing, based on the obtained specific parameters for LTE CRS-IM, the CRS antenna port signal for each CRS antenna port.
C: cancelling the interference caused by each CRS antenna port signal from the received PDSCH based on the time domain position and the frequency domain position of each CRS antenna port and the CRS antenna port signal.

In the embodiment, each CRS antenna port signal *s(k, l)* at the time domain position *l* and the frequency domain position *k* for each CRS antenna port is reconstructed, and channel estimation is performed for the time-frequency domain position *(k, l)* to obtain the channel response *H(k, l)* of each CRS antenna port at the corresponding time and frequency domain position. The CRS interference signal *R_inter(k, l) = H(k, l)* * *s(k, l)* is reconstructed using the channel response *H(k, l)* and the CRS antenna port signal *s(k, l).* The reconstructed CRS interference signal *R_inter(k, l)* is subtracted from the received PDSCH signal *r(k, l)* at the time domain and frequency domain position of each CRS antenna port to obtain the PDSCH signal without CRS interference *rl(k, l) = r(k, l)* - *R_inter(k, l).*

It should be noted that in case that the NR UE does not have the capability for LTE CRS-IM, PDSCH is directly received. In case that the interference caused by the LTE CRS from the neighboring cell does not exist, PDSCH is directly received.

In an embodiment, when the NR UE initially accesses, the NR UE reports to the base station that whether the NR UE itself has the capability for LTE CRS-IM.

In an embodiment, it should be noted that the capability for LTE CRS-IM is a UE capability, and only the UE having this UE capability is able to perform LTE CRS-IM. In an embodiment, a flag bit in the UE may be used to identify whether the UE has this capability.

In this embodiment, it is determined whether the interference caused by the LTE CRS from the neighboring cell exists firstly; and in case that the interference caused by the LTE CRS from the neighboring cell exists, it is determined whether the NR UE is able to perform LTE CRS-IM based on whether the NR UE has the capability for LTE CRS-IM, and in case that the NR UE has the capability for LTE CRS-IM, the NR UE performs the LTE CRS-IM. The embodiments of the present application may effectively solve the related issues of LTE CRS-IM, and also avoid excessive resource consumption caused by unnecessary LTE CRS-IM performed by the NR UE when interference caused by the LTE CRS from the neighboring cell does not exist. In addition, the UE may determine, based on its own capability, whether the UE is able to perform LTE CRS-IM.

Based on the above embodiments, in an embodiment, the determining whether the interference caused by the LTE CRS from the neighboring cell exists, includes:
determining whether LTE CRS-IM signaling is received; and
in case that the LTE CRS-IM signaling is received, determining that the interference caused by the LTE CRS from the neighboring cell exists,
where the LTE CRS-IM signaling is signaling transmitted from the base station to notify the NR UE of the existence of LTE CRS interference.

In this embodiment, the NR UE determines, based on whether the LTE CRS-IM signaling is received, whether the interference caused by the LTE CRS from the neighboring cell exists. In case that the NR UE receives the LTE CRS-IM signaling, it is determined that the interference caused by the LTE CRS from the neighboring cell exists; and in case that the NR LTE does not receive the LTE CRS-IM signaling, the interference caused by the LTE CRS from the neighboring cell does not exist.

In an embodiment, the base station determines, based on whether the NR UE meets one of the following three conditions, whether the interference caused by the LTE CRS from the neighboring cell for the NR UE exists. In case that the interference caused by the LTE CRS from the neighboring cell exists, the base station transmits the LTE CRS-IM signaling to the UE. Condition 1: a serving cell of the NR UE is a dynamic spectrum sharing (DSS) cell, and a neighboring cell of the NR UE is also a DSS cell; condition 2: a serving cell of the NR UE is a DSS cell, and a neighboring cell of the NR LTE is an LTE cell; and condition 3: a serving cell of the NR UE is an NR cell, and a neighboring cell of the NR UE is an LTE cell.

In an embodiment, by determining, based on whether LTE CRS-IM signaling is received, whether the interference caused by the LTE CRS from the neighboring cell exists, excessive resource consumption caused by unnecessary LTE CRS-IM performed by the NR UE when the interference does not exist is avoided.

Based on the above embodiments, in an embodiment, the LTE CRS-IM signaling includes:
first signaling used to indicate that the interference caused by the LTE CRS from the neighboring cell exists, where the first signaling includes one or more of the followings: radio resource control (RRC) signaling, medium access control-control element (MAC-CE) signaling and downlink control information (DCI) signaling;
   or,
second signaling used to indicate parameters required for performing LTE CRS-IM, where the second signaling includes RRC signaling.

In an embodiment, the LTE CRS-IM signaling may be signaling that only used to notify the NR UE of the existence of LTE CRS interference (for example, indicates whether the interference exists through "true" or "false"), or may be signaling that includes specific parameters for LTE CRS-IM.

Based on the above embodiments, in an embodiment, the performing LTE CRS-IM includes:
obtaining parameters required for performing LTE CRS-IM;
reconstructing, based on the obtained parameters for LTE CRS-IM, the CRS antenna port signal for each CRS antenna port; and
cancelling the interference caused by each CRS antenna port signal from the received PDSCH based on the time domain position and the frequency domain position of each CRS antenna port and the CRS antenna port signal of CRS antenna port.

In this embodiment, each CRS antenna port signal *s(k, l)* at the time domain position *l* and the frequency domain position *k* for each CRS antenna port is reconstructed, and channel estimation is performed for the time-frequency domain position *(k, l)* to obtain the channel response *H(k, l)* of each CRS antenna port at the corresponding time and frequency domain position. The CRS interference signal *R_inter(k, l)* = *H(k, l)* * *s(k, l)* is reconstructed using the channel response *H(k, l)* and the CRS antenna port signal *s(k, l).* The reconstructed CRS interference signal *R_inter(k, l)* is subtracted from the received PDSCH signal *r(k, l)* at the time domain and frequency domain position of each CRS antenna port to obtain the PDSCH signal without CRS interference *rl(k, l)* = *r(k, l)* - *R_inter(k, l).*

In this embodiment, a specific scheme for performing LTE CRS-IM is provided. Through the scheme of the embodiment, the related issues of IM caused by the LTE CRS from the neighboring cell to the NR UE in the serving cell may be effectively solved.

Based on the above embodiments, in an embodiment, the obtaining parameters required for performing LTE CRS-IM includes:
receiving the first signaling used to indicate that the interference caused by the LTE CRS from the neighboring cell exists, and obtaining, by using blind detection, the parameters required for performing LTE CRS-IM from an LTE broadcast signal from the neighboring cell;
receiving the first signaling used to indicate that the interference caused by the LTE CRS from the neighboring cell exists, and obtaining the parameters required for performing LTE CRS-IM from lte-CRS-PatternList1 and/or lte-CRS-PatternList2 in ServingCellConfig signaling; and
receiving the second signaling used to indicate the parameters required for performing LTE CRS-IM, and obtaining the parameters for LTE CRS-IM from the LTE CRS-IM signaling.

In the embodiment, there are multiple implementations for obtaining the parameters required for performing LTE CRS-IM. One is to receive the first signaling used to directly indicate that the interference caused by the LTE CRS from the neighboring cell exists, and obtain, by using blind detection, the parameters required for performing LTE CRS-IM from the LTE broadcast signal from the neighboring cell; another is to receive the first signaling used to directly indicate that the interference caused by the LTE CRS from the neighboring cell exists, and obtain the parameters required for performing LTE CRS-IM from lte-CRS-PatternList1 and/or lte-CRS-PatternList2 in the ServingCellConfig signaling; and another is to receive the second signaling used to indicate the parameters required for performing LTE CRS-IM, and obtain the parameters for performing LTE CRS-IM from the LTE CRS-IM signaling. The embodiment may obtain the parameters required for performing LTE CRS-IM through various implementations, which facilitates application. In the actual process, a suitable implementation may be selected based on the specific situation to obtain the parameters required for performing LTE CRS-IM.

Based on the above embodiments, in an embodiment, the parameters required for performing LTE CRS-IM include one or more of the followings:
an LTE downlink carrier bandwidth, an LTE carrier center frequency, a physical cell ID of a neighboring interfering cell, the number of CRS antenna ports, a multicast/broadcast single frequency network (MBSFN) configuration, a v-shift.

In an embodiment, the parameters required for performing LTE CRS-IM may include one or more of the above to assist in subsequent IM.

Based on the above embodiments, in an embodiment, after performing LTE CRS-IM, the method further includes:
receiving a physical downlink shared channel (PDSCH).

In addition, it should be noted that in case that the NR UE is unable to perform LTE CRS-IM, PDSCH is directly received. Or, in case that the interference caused by the LTE CRS from the neighboring cell does not exist, PDSCH is directly received.

FIG. 7 is a schematic flowchart of an interference mitigation (IM) method applied to a base station according to an embodiment of the present application. As shown in FIG. 7, the IM method includes the following steps:
step 71: determining whether an interference caused by a long term evolution (LTE) cell-specific reference signal (CRS) from a neighboring cell to a new radio (NR) user equipment (UE) exists, and in case that the interference caused by the LTE CRS from the neighboring cell to the NR UE exists, transmitting LTE CRS-IM signaling to the NR UE to notify the NR UE of the existence of LTE CRS interference; and
step 72: after the NR UE receives the LTE CRS-IM signaling, the NR UE determines, based on whether the NR UE has a capability for LTE CRS-IM, whether the NR UE is able to perform LTE CRS-IM, and in case that the NR UE has the capability for LTE CRS-IM, the NR UE performs LTE CRS-IM.

In an embodiment, it is determined firstly whether the interference caused by the LTE CRS from the neighboring cell exists; and in case that the interference caused by the LTE CRS from the neighboring cell exists, the LTE CRS-IM signaling is transmitted to the NR UE to notify the NR UE of the existence of LTE CRS interference; and after the NR UE receives the LTE CRS-IM signaling, the NR UE determines, based on whether the NR UE has the capability for LTE CRS-IM, whether the NR UE is able to perform LTE CRS-IM, and in case that the NR UE has the capability for LTE CRS-IM, the NR UE performs the LTE CRS-IM. The embodiments of the present application may effectively solve the related issues of LTE CRS-IM, and also avoid excessive resource consumption caused by unnecessary LTE CRS-IM performed by the NR UE when interference caused by the LTE CRS from the neighboring cell does not exist. In addition, the UE may determine, based on its own capability, whether the UE is able to perform LTE CRS-IM.

Based on the above embodiments, in an embodiment, the determining whether the interference caused by the LTE CRS from the neighboring cell to the NR UE exists, includes:
determining whether the NR UE meets one of the following three conditions, and in case that the NR UE meets one of the following three conditions, determining that the interference caused by the LTE CRS from the neighboring cell exists:
condition 1: a serving cell of the NR UE is a dynamic spectrum sharing (DSS) cell, and a neighboring cell of the NR UE is a DSS cell;
condition 2: a serving cell of the NR UE is a DSS cell, and a neighboring cell of the NR UE is an LTE cell; and
condition 3: a serving cell of the NR UE is an NR cell, and a neighboring cell of the NR UE is an LTE cell.

In an embodiment, referring to the previous description in conjunction with FIG. 2, FIG. 3, and FIG. 4, it could be seen that when condition 1 is met: the serving cell of the NR UE is a DSS cell, and the neighboring cell of the NR LTE is a DSS cell; or condition 2 is met: the serving cell of the NR UE is a DSS cell, and the neighboring cell of the NR LTE is an LTE cell; or condition 3 is met: the serving cell of the NR UE is an NR cell, and the neighboring cell of the NR UE is an LTE cell, it is indicated that the interference caused by the LTE CRS from the neighboring cell exists. The base station transmits the LTE CRS-IM signaling to the NR UE to notify the NR UE of the existence of LTE CRS interference, so that the NR UE determines, based on whether the NR UE has the capability for LTE CRS-IM, whether the NR UE has a capability for LTE CRS-IM, and in case that the NR UE determines it has the capability for LTE CRS-IM, the NR UE performs LTE CRS-IM.

The following is a detailed explanation and description of the interference mitigation (IM) method provided in the present application through specific embodiments.

### Embodiment 1:

LTE CRS-IM signaling is signaling used to notify an NR UE of the existence of LTE CRS interference, and the NR UE obtains, by using blind detection, following specific parameters for performing LTE CRS-IM from signals such as LTE PBCH from a neighboring cell.

Step 1: the NR UE receives the LTE CRS-IM signaling (IMLTE CRS). The LTE CRS-IM signaling is simple signaling that only includes parameters indicating whether an interference caused by an LTE CRS exists (YES/NO). It may be RRC signaling, MAC CE signaling, DCI signaling, or a combination thereof.

Step 2: the NR UE determines, based on whether the LTE CRS-IM signaling is received or not, whether the interference caused by the LTE CRS from the neighboring cell exists. In case that the NR UE receives the LTE CRS-IM signaling, it is indicated that the interference caused by the LTE CRS from the neighboring cell exists; and in case that the NR UE does not receive the LTE CRS-IM signaling, it is indicated that the interference caused by the LTE CRS from the neighboring cell does not exist.

In case that the interference caused by the LTE CRS from the neighboring cell exists, the NR UE determines whether the NR UE itself has the capability for LTE CRS-IM (or CRS interference cancellation). In case that the NR UE has the capability for LTE CRS-IM, the NR UE performs the LTE CRS-IM (or CRS interference cancellation) on PDSCH. After the LTE CRS-IM is performed, PDSCH is directly received.

The IM scheme for LTE CRS from the neighboring cell may be as follows.
A: obtaining specific parameters for LTE CRS-IM: the NR UE obtains, by using blind detection, following specific parameters for performing LTE CRS-IM from signals such as LTE PBCH from the neighboring cell. Specific parameters for performing LTE CRS-IM include: an LTE downlink carrier bandwidth, an LTE carrier center frequency, a physical cell ID of a neighboring interfering cell, the number of CRS antenna ports, an MBSFN configuration, a v-shift and etc.
B: reconstructing, based on the obtained specific parameters for LTE CRS-IM, the CRS antenna port signal for each CRS antenna port. Determining, based on the MBSFN configuration, the time domain location of the CRS port firstly; and determining the frequency domain location of each CRS antenna port based on the number of CRS antenna ports, the LTE downlink carrier bandwidth, and the LTE carrier center frequency; and reconstructing each CRS antenna port signal based on the physical cell ID and the v-shift parameter.
C: cancelling the interference caused by each CRS antenna port signal from the received PDSCH based on the time domain position and the frequency domain position of each CRS antenna port and the CRS antenna port signal.

In the embodiment, each CRS antenna port signal *s(k, l)* at the time domain position 1 and the frequency domain position *k* for each CRS antenna port is reconstructed, and channel estimation is performed for the time-frequency domain position *(k, l)* to obtain the channel response *H(k, l)* of each CRS antenna port at the corresponding time and frequency domain position. The CRS interference signal *R_inter(k, l) = H(k, l)* * *s(k, l)* is reconstructed using the channel response *H(k, l)* and the CRS antenna port signal *s(k, l).* The reconstructed CRS interference signal *R_inter(k, l)* is subtracted from the received PDSCH signal *r(k, l)* at the time domain and frequency domain position of each CRS antenna port to obtain the PDSCH signal without CRS interference *rl(k, l)* = *r(k, l)* - *R_inter(k, l).*

In case that the NR UE does not have the capability for LTE CRS-IM, PDSCH is directly received.

In an embodiment, when the NR UE initially accesses, the NR UE reports to the base station that whether the NR UE itself has the capability for LTE CRS-IM, and the base station transmits the LTE CRS-IM signaling to the NR UE.

In case that the interference caused by the LTE CRS from the neighboring cell does not exist, PDSCH is directly received.

### Embodiment 2:

LTE CRS-IM signaling is signaling used to notify an NR UE of the existence of LTE CRS interference, and the NR UE obtains following specific parameters for performing LTE CRS-IM from lte-CRS-PatternListl and/or lte-CRS-PatternList2 in the ServingCellConfig signaling.

Step 1: the NR UE receives the LTE CRS-IM signaling (IMLTE CRS). The LTE CRS-IM signaling is simple signaling that only includes parameters indicating whether an interference caused by an LTE CRS exists (YES/NO). It may be RRC signaling, MAC CE signaling, DCI signaling, or a combination thereof.

Step 2: the NR UE determines, based on whether the LTE CRS-IM signaling is received, whether the interference caused by the LTE CRS from the neighboring cell exists. In case that the NR UE receives the LTE CRS-IM signaling, it is indicated that the interference caused by the LTE CRS from the neighboring cell exists; and in case that the NR UE does not receive the LTE CRS-IM signaling, it is indicated that the interference caused by the LTE CRS from the neighboring cell does not exist.

In case that the interference caused by the LTE CRS from the neighboring cell exists, the NR UE determines whether the NR UE itself has the capability for LTE CRS-IM (or CRS interference cancellation). In case that the NR UE has the capability for LTE CRS-IM, the NR UE performs the LTE CRS-IM (or CRS interference cancellation) on PDSCH. After the LTE CRS-IM is performed, PDSCH is directly received.

The IM scheme for LTE CRS from the neighboring cell may be as follows.
A: obtaining specific parameters for performing LTE CRS-IM: obtaining following specific parameters for performing LTE CRS-IM from lte-CRS-PatternListl and/or lte-CRS-PatternList2 in the ServingCellConfig signaling. Specific parameters for LTE CRS-IM include: an LTE downlink carrier bandwidth, an LTE carrier center frequency, a physical cell ID of a neighboring interfering cell, the number of CRS antenna ports, an MBSFN configuration, a v-shift and etc.
B: reconstructing, based on the obtained specific parameters for LTE CRS-IM in the neighboring cell, the CRS antenna port signal for each CRS antenna port. Determining, based on the MBSFN configuration, the time domain location of the CRS port firstly; and determining, based on the number of CRS antenna ports, the LTE downlink carrier bandwidth, and the LTE carrier center frequency, that the frequency domain location of each CRS antenna port; and reconstructing each CRS antenna port signal based on the physical cell ID and the v-shift parameter.
C: cancelling the interference caused by each CRS antenna port signal from the received PDSCH based on the time domain position and the frequency domain position of each CRS antenna port and the CRS antenna port signal.

In the embodiment, each CRS antenna port signal *s(k, l)* at the time domain position *l* and the frequency domain position *k* for each CRS antenna port is reconstructed, and channel estimation is performed for the time-frequency domain position *(k, l)* to obtain the channel response *H(k, l)* of each CRS antenna port at the corresponding time and frequency domain position. The CRS interference signal *R_inter(k, l)* = *H(k, l)* * *s(k, l)* is reconstructed using the channel response *H(k, l)* and the CRS antenna port signal *s(k, l).* The reconstructed CRS interference signal *R_inter(k, l)* is subtracted from the received PDSCH signal *r(k, l)* at the time domain and frequency domain position of each CRS antenna port to obtain the PDSCH signal without CRS interference *rl(k, l)* = *r(k, l)* - *R_inter(k, l).*

In case that the NR UE does not have the capability for LTE CRS-IM, PDSCH is directly received.

In an embodiment, when the NR UE initially accesses, the NR UE reports to the base station that whether the NR UE itself has the capability for LTE CRS-IM, and the base station transmits the LTE CRS-IM signaling to the NR UE.

In case that the interference caused by the LTE CRS from the neighboring cell does not exist, PDSCH is directly received.

### Embodiment 3:

LTE CRS-IM signaling is signaling including specific parameters for LTE CRS-IM, and the NR UE directly reads specific parameters for LTE CRS-IM from the LTE CRS-IM signaling.

Step 1: the NR UE receives the LTE CRS-IM signaling (IMLTE CRS). The LTE CRS-IM signaling is simple signaling that only includes parameters indicating whether an interference caused by an LTE CRS exists (YES/NO). It may be RRC signaling, MAC CE signaling, DCI signaling, or a combination thereof.

Step 2: the NR UE determines, based on whether the LTE CRS-IM signaling is received or not, whether the interference caused by the LTE CRS from the neighboring cell exists. In case that the NR UE receives the LTE CRS-IM signaling, it is indicated that the interference caused by the LTE CRS from the neighboring cell exists; and in case that the NR UE does not receive the LTE CRS-IM signaling, it is indicated that the interference caused by the LTE CRS from the neighboring cell does not exist.

In case that the interference caused by the LTE CRS from the neighboring cell exists, the NR UE determines whether the NR UE itself has the capability for LTE CRS-IM (or CRS interference cancellation). In case that the NR UE has the capability for LTE CRS-IM, the NR UE performs the LTE CRS-IM (or CRS interference cancellation) on PDSCH. After the LTE CRS-IM is performed, PDSCH is directly received.

The IM scheme for LTE CRS from the neighboring cell may be as follows.
A: obtaining specific parameters for LTE CRS-IM: the NR UE directly reads specific parameters for LTE CRS-IM from the LTE CRS-IM signaling. Specific parameters for LTE CRS-IM include: an LTE downlink carrier bandwidth, an LTE carrier center frequency, a physical cell ID of a neighboring interfering cell, the number of CRS antenna ports, an MBSFN configuration, a v-shift and etc. The information element (IE) of the IMLTE-CRS (LTE CRS-IM signaling) may include: the LTE downlink carrier bandwidth, the LTE carrier center frequency, the physical cell ID of the neighboring interfering cell, the number of CRS antenna ports, the MBSFN configuration, the v-shift and etc.
B: reconstructing, based on the obtained specific parameters for LTE CRS-IM, the CRS antenna port signal for each CRS antenna port. Determining, based on the MBSFN configuration, the time domain location of the CRS port firstly; and determining, based on the number of CRS antenna ports, the LTE downlink carrier bandwidth, and the LTE carrier center frequency, that the frequency domain location of each CRS antenna port; and reconstructing each CRS antenna port signal based on the physical cell ID and the v-shift parameter.
C: cancelling the interference caused by each CRS antenna port signal from the received PDSCH based on the time domain position and the frequency domain position of each CRS antenna port and the CRS antenna port signal.

In the embodiment, each CRS antenna port signal *s(k, l)* at the time domain position *l* and the frequency domain position *k* for each CRS antenna port is reconstructed, and channel estimation is performed for the time-frequency domain position *(k, l)* to obtain the channel response *H(k, l)* of each CRS antenna port at the corresponding time and frequency domain position. The CRS interference signal *R_inter(k, l)* = *H(k, l)* * *s(k, l)* is reconstructed using the channel response *H(k, l)* and the CRS antenna port signal *s(k, l).* The reconstructed CRS interference signal *R_inter(k, l)* is subtracted from the received PDSCH signal *r(k, l)* at the time domain and frequency domain position of each CRS antenna port to obtain the PDSCH signal without CRS interference *rl(k, l)* = *r(k, l)* - *R_inter(k, l).*

In case that the NR UE does not have the capability for LTE CRS-IM, PDSCH is directly received.

In an embodiment, when the NR UE initially accesses, the NR UE reports to the base station that whether the NR UE itself has the capability for LTE CRS-IM, and the base station transmits the LTE CRS-IM signaling to the NR UE.

In case that the interference caused by the LTE CRS from the neighboring cell does not exist, PDSCH is directly received.

In an embodiment, it should be noted that the NR UE determines, based on whether the interference caused by the LTE CRS from the neighboring cell exists and whether the NR UE has the capability for LTE CRS-IM, that whether LTE CRS-IM is performed. The embodiments of the present application may effectively solve the related issues of LTE CRS-IM, and also avoid excessive resource consumption caused by unnecessary LTE CRS-IM performed by the NR UE when interference caused by the LTE CRS from the neighboring cell does not exist. In addition, the UE may determine, based on its own capability, whether the UE is able to perform LTE CRS-IM.

Finally, it should be noted that the processing mode in the related art is to perform rate matching on the configured CRS on the UE side, rather than to perform interference cancellation on the UE side. The embodiments of the present application may cancel the interference caused by LTE CRS. In addition, in the related art, the CRS pattern used for rate matching is semi statically notified by the RRC, while in the embodiments of the present application, the IM CRS pattern may be semi statically notified by the RRC, be dynamically indicated, or be read from the broadcast.

In an embodiment, the IM CRS pattern may refer to the first signaling used to directly indicate that the interference caused by the LTE CRS from the neighboring cell exists, or the second signaling used to indicate parameters required for performing LTE CRS-IM, both of which are mentioned in the above embodiments.

It should be understood that since the second signaling carries parameters such as the LTE downlink carrier bandwidth, the LTE carrier center frequency, the physical cell ID of the neighboring interfering cell, the number of CRS antenna ports, the MBSFN configuration, and the v-shift, in case that the IM CRS pattern refers to the second signaling, these parameters are included in the IM CRS pattern.

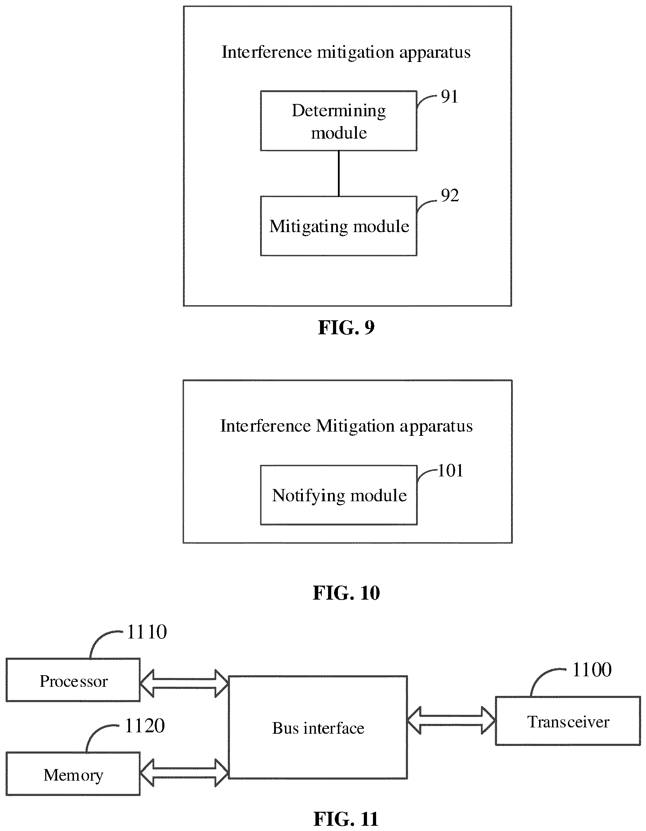

In addition, FIG. 9 is a schematic structural diagram of an interference mitigation (IM) apparatus applied to a new radio (NR) user equipment (UE) according to an embodiment of the present application. As shown in FIG. 9, the IM apparatus includes:
a determining module 91, used for determining whether an interference caused by a long term evolution (LTE) cell-specific reference signal (CRS) from a neighboring cell exists; and
a mitigating module 92, used for determining, in case that the interference caused by the LTE CRS from the neighboring cell exists, whether the NR UE is able to perform LTE CRS-IM based on whether the NR UE has a capability for LTE CRS-IM, and performing LTE CRS-IM in case that the NR UE has the capability for LTE CRS-IM.

It should be noted here that the apparatus may implement all the method steps in the IM method embodiment applied to the new radio (NR) user equipment (UE), and may achieve the same effect. It is not repeated in the present application.

In addition, FIG. 10 is a schematic structural diagram of an interference mitigation (IM) apparatus applied to a base station according to an embodiment of the present application. As shown in FIG. 10, the IM apparatus includes:
a notifying module 101, used for determining whether an interference caused by a long term evolution (LTE) cell-specific reference signal (CRS) from a neighboring cell to a new radio (NR) user equipment (UE) exists, and in case that the interference caused by the LTE CRS from the neighboring cell to the NR UE exists, transmitting LTE CRS-IM signaling to the NR UE to notify the NR UE of an existence of LTE CRS interference,
where after the NR UE receives the LTE CRS-IM signaling, the NR UE determines, based on whether the NR UE has a capability for LTE CRS-IM, whether the NR UE is able to perform LTE CRS-IM, and in case that the NR UE has the capability for LTE CRS-IM, the NR UE performs LTE CRS-IM.

It should be noted here that the apparatus may implement all the method steps in the IM method embodiment applied to the base station, and may achieve the same effect. It is not repeated in the present application.

FIG. 11 is a schematic structural diagram of an electronic device according to an embodiment of the present application. As shown in FIG. 11, the electronic device includes a memory 1120, a transceiver 1100, and a processor 1110.

In FIG. 11, the bus architecture may include any number of interconnected buses and bridges, which are linked together by one or more processors represented by the processor 1110 and various circuits of the memory represented by the memory 1120. The bus architecture may link various other circuits such as peripheral devices, regulators, and power management circuits together. The bus interface provides an interface. The transceiver 1100 may be multiple components, i.e., including a transmitter and a receiver, providing a unit for communicating with various other devices on the transmission medium, and the transmission medium includes wireless channels, wired channels, optical cables, and other transmission media. The processor 1110 is responsible for managing the bus architecture and the usual processing, and the memory 1120 may store data used by the processor 1110 in performing operations.

The processor 1110 may be a central processing unit (CPU), an application specific integrated circuit (ASIC), a field-programmable gate array (FPGA), or a complex programmable logic device (CPLD), and the processor may also adopt multi-core architecture.

The memory 1120 is used for storing computer programs; the transceiver 1100 is used for transmitting and receiving data under a control of the processor; and the processor 1110 is used for obtaining the computer programs in the memory and performing the following operations:
determining whether the interference caused by the long term evolution (LTE) cell-specific reference signal (CRS) from the neighboring cell exists;
in case that the interference caused by the LTE CRS from the neighboring cell exists, determining whether the NR UE is able to perform LTE CRS interference mitigation (IM) based on whether the NR UE has a capability for LTE CRS-IM, and in case that the NR UE has the capability for LTE CRS-IM, performing LTE CRS-IM.

In an embodiment, the determining whether the interference caused by the LTE CRS from the neighboring cell exists, includes:
determining whether the LTE CRS-IM signaling is received; and
in case that the LTE CRS-IM signaling is received, determining that the interference caused by the LTE CRS from the neighboring cell exists,
where the LTE CRS-IM signaling is signaling transmitted from the base station to notify the NR UE of the existence of LTE CRS interference.

In an embodiment, the LTE CRS-IM signaling includes:
first signaling used to indicate that the interference caused by the LTE CRS from the neighboring cell exists, where the first signaling includes one or more of the followings: radio resource control (RRC) signaling, medium access control-control element (MAC-CE) signaling and downlink control information (DCI) signaling;
   or,
second signaling used to indicate parameters required for performing LTE CRS-IM, where the second signaling includes RRC signaling.

In an embodiment, the performing LTE CRS-IM includes:
obtaining parameters required for performing LTE CRS-IM;
reconstructing, based on the parameters required for performing LTE CRS-IM, the CRS antenna port signal for each CRS antenna port; and
cancelling the interference caused by each CRS antenna port signal from the received PDSCH based on the time domain position and the frequency domain position of each CRS antenna port and the CRS antenna port signal.

In an embodiment, the obtaining parameters required for performing LTE CRS-IM includes:
receiving the first signaling used to indicate that the interference caused by the LTE CRS from the neighboring cell exists, and obtaining, by using blind detection, the parameters required for performing LTE CRS-IM from the LTE broadcast signal from the neighboring cell;
receiving the first signaling used to indicate that the interference caused by the LTE CRS from the neighboring cell exists, and obtaining parameters required for performing LTE CRS-IM from lte-CRS-PatternListl and/or lte-CRS-PatternList2 in the ServingCellConfig signaling; and
receiving the second signaling used to indicate parameters required for performing LTE CRS-IM, and obtaining the parameters for LTE CRS-IM from the LTE CRS-IM signaling.

In an embodiment, the parameters required for performing LTE CRS-IM include one or more of the followings:
an LTE downlink carrier bandwidth, an LTE carrier center frequency, a physical cell ID of a neighboring interfering cell, the number of CRS antenna ports, an MBSFN configuration and a v-shift.

In an embodiment, after performing LTE CRS-IM, the method further includes:
receiving a PDSCH.

In an embodiment, the IM method further includes:
receiving a PDSCH in case that the NR UE is unable to perform LTE CRS-IM.

In an embodiment, the IM method further includes:
receiving a PDSCH in case that the interference caused by the LTE CRS from the neighboring cell does not exist.

In an embodiment, the IM method further includes:
reporting to a base station that whether the NR UE has the capability for LTE CRS-IM.

In addition, the processor 1110 is used for reading the computer programs in the memory and performing the following operations:
determining whether an interference caused by a long term evolution (LTE) cell-specific reference signal (CRS) from a neighboring cell to a new radio (NR) user equipment (UE) exists, and in case that the interference caused by the LTE CRS from the neighboring cell exists, transmitting LTE CRS-IM signaling to the NR UE to notify the NR UE of the existence of LTE CRS interference,
where after the NR UE receives the LTE CRS-IM signaling, the NR UE determines, based on whether the NR UE has a capability for LTE CRS-IM, whether the NR UE is able to perform LTE CRS-IM, and in case that the NR UE has the capability for LTE CRS-IM, the NR UE performs LTE CRS-IM.

In an embodiment, the determining whether the interference caused by the long term evolution (LTE) cell-specific reference signal (CRS) from the neighboring cell to the new radio (NR) user equipment (UE) exists, includes:
determining whether the NR UE meets one of the following three conditions, and in case that the NR UE meets one of the following three conditions, determining that the interference caused by the LTE CRS from the neighboring cell exists:
condition 1: a serving cell of the NR UE is a dynamic spectrum sharing (DSS) cell, and a neighboring cell of the NR UE is a DSS cell;
condition 2: a serving cell of the NR UE is a DSS cell, and a neighboring cell of the NR UE is an LTE cell; and
condition 3: a serving cell of the NR UE is an NR cell, and a neighboring cell of the NR UE is an LTE cell.

It should be noted here that the electronic device provided by the embodiments of the present application may implement all the method steps in the IM method embodiment applied to the base station, and may achieve the same effect. It is not repeated in the present application.

It should be noted that the division of units in the embodiments of the present application is schematic and is only a logical functional division, and there may be other division schemes in actual implementation. In addition, each functional unit in each embodiment of the present application may be integrated in a single processing unit, or each unit may physically exist separately, or two or more units may be integrated in a single unit. The above integrated units may be implemented either in the form of hardware or in the form of software functional units.

The integrated unit may be stored in a processor readable storage medium in case that it is implemented in the form of a software functional unit and sold or used as a separate product. Based on this understanding, the solutions of the present application in essence, or the part contributing to the related art, or all or part of the solutions may be embodied in the form of a software product, which is stored in a storage medium and includes several instructions to enable a computer device (which may be a personal computer, a server, or a network device, etc.) or processor to perform all or part of the steps of the methods described in various embodiments of the present application. The aforementioned storage medium includes: USB flash disk, movable hard drives, read-only memory (ROM), random access memory (RAM), magnetic disks, or optical discs, and other media that may store program code.

It should be noted here that the above-mentioned apparatuses provided by the embodiments of the present application may implement all the method steps in the above-mentioned method embodiments, and may achieve the same effect. The same parts and beneficial effects as the same method embodiments are not repeated in the present application.

An embodiment of the present application provides a processor readable storage medium, where the processor readable storage medium stores a computer program, and the computer program, when executed by a processor, causes the processor to perform the IM method applied to the new radio (NR) user equipment (UE) or the IM method applied to the base station in the aforementioned embodiment.

The processor readable storage medium may be any available medium or data storage device that the processor may access, including but not limited to magnetic memory (such as floppy disks, hard disks, magnetic tapes, magneto-optical disks (MO), etc.), optical memory (such as CD, DVD, BD, HVD, etc.), and semiconductor memory (such as ROM, EPROM, EEPROM, non-volatile memory (NAND FLASH), solid-state drive (SSD), etc.).

As seen in the above embodiments, the processor readable storage medium stores a computer program used to cause the processor to perform the information determination scheme described above.

It should be understood to the skilled in the art that embodiments of the present application may be provided as schemes, systems, or computer program products. Therefore, the present application may take the form of complete hardware embodiments, complete software embodiments, or embodiments combining software and hardware aspects. Moreover, the present application may take the form of computer program products implemented on one or more computer available storage media (including but not limited to disk storage and optical storage, etc.) containing computer available program code.

The present application is described with reference to flowcharts and/or block diagrams of schemes, devices (systems), and computer program products according to embodiments of the present application. It should be understood that each process and/or box in the flowchart and/or block diagram, as well as the combination of processes and/or boxes in the flowchart and/or block diagram, may be implemented by computer executable instructions. These computer executable instructions may be provided to processors of general purpose computers, specialized computers, embedded processors, or other programmable data processing devices to produce a machine such that the indication executed by processors of computers or other programmable data processing devices may produce devices for implementing the functions specified in one or more processes of the flowchart and/or one or more boxes of the block diagram.

These processor executable instructions may also be stored in a processor readable memory capable of directing a computer or other programmable data processing device to operate in a particular manner such that the indication stored in the processor readable memory produce manufactured products including indication devices that implement the function specified in one or more processes of a flowchart and/or one or more boxes of a block diagram.

These processor executable instructions may also be loaded onto a computer or other programmable data processing device such that a series of operational steps are performed on the computer or other programmable device to produce computer-implemented processing, thereby the indication executed on the computer or other programmable device provide steps for implementing the functions specified in one or more processes of the flowchart and/or one or more boxes of the block diagram.

It is obvious that the skilled in the art may make various changes and variations to the present application without departing from the scope of the present application. In this way, in case that these modifications and variations of the present application are within the scope of the claims of the present application and their equivalent technologies, the present application also intends to include these modifications and variations as well.

## Claims

1. An interference mitigation, IM, method, applied to a new radio, NR, user equipment, UE, comprising:
determining whether an interference caused by a long term evolution, LTE, cell-specific reference signal, CRS, from a neighboring cell exists;
in case that the interference caused by the LTE CRS from the neighboring cell exists, determining whether the NR UE is able to perform LTE CRS-IM based on whether the NR UE has a capability for LTE CRS-IM, and
in case that the NR UE has the capability for LTE CRS-IM, performing LTE CRS-IM.

2. The method of claim 1, wherein the determining whether the interference caused by the LTE CRS from the neighboring cell exists comprises:
determining whether LTE CRS-IM signaling is received; and
in case that the LTE CRS-IM signaling is received, determining that the interference caused by the LTE CRS from the neighboring cell exists,
wherein the LTE CRS-IM signaling is signaling transmitted from a base station to notify the NR UE of the existence of LTE CRS interference.

3. The method of claim 2, wherein the LTE CRS-IM signaling comprises:
first signaling used to indicate that the interference caused by the LTE CRS from the neighboring cell exists, wherein the first signaling comprises one or more of the followings: radio resource control, RRC, signaling, medium access control-control element, MAC-CE, signaling and downlink control information, DCI, signaling;
or,
second signaling used to indicate parameters required for performing LTE CRS-IM, wherein the second signaling comprises RRC signaling.

4. The method of claim 3, wherein the performing LTE CRS-IM comprises:
obtaining parameters required for performing LTE CRS-IM;
reconstructing, based on the parameters required for performing LTE CRS-IM, CRS antenna port signal for each CRS antenna port; and
cancelling an interference caused by each CRS antenna port signal from a received physical downlink shared channel, PDSCH, based on a time domain position and a frequency domain position of each CRS antenna port and the CRS antenna port signal for each CRS antenna port.

5. The method of claim 4, wherein the obtaining parameters required for performing LTE CRS-IM comprises:
receiving the first signaling used to indicate that the interference caused by the LTE CRS from the neighboring cell exists, and obtaining, by using blind detection, the parameters required for performing LTE CRS-IM from an LTE broadcast signal from the neighboring cell;
receiving the first signaling used to indicate that the interference caused by the LTE CRS from the neighboring cell exists, and obtaining the parameters required for performing LTE CRS-IM from lte-CRS-PatternList1 and/or lte-CRS-PatternList2 in ServingCellConfig signaling; and
receiving the second signaling used to indicate the parameters required for performing LTE CRS-IM, and obtaining the parameters for LTE CRS-IM from the LTE CRS-IM signaling.

6. The method of claim 4, wherein the parameters required for performing LTE CRS-IM comprise one or more of the followings:
an LTE downlink carrier bandwidth, an LTE carrier center frequency, a physical cell ID of a neighboring interfering cell, the number of CRS antenna ports, a multicast/broadcast single frequency network, MBSFN, configuration, a v-shift.

7. The method of claim 1, wherein after the performing LTE CRS-IM, the method further comprises:
receiving a physical downlink shared channel, PDSCH.

8. The method of claim 1, further comprising:
receiving a physical downlink shared channel, PDSCH, in case that the NR UE is unable to perform LTE CRS-IM.

9. The method of claim 1, further comprising:
receiving a physical downlink shared channel, PDSCH, in case that the interference caused by the LTE CRS from the neighboring cell does not exist.

10. The method of claim 1, further comprising:
reporting to a base station that whether the NR UE has the capability for LTE CRS-IM.

11. An interference mitigation, IM, method, applied to a base station, comprising:
determining whether an interference caused by a long term evolution, LTE, cell-specific reference signal, CRS, from a neighboring cell to a new radio, NR, user equipment, UE, exists; and
in case that the interference caused by the LTE CRS from the neighboring cell to the NR UE exists, transmitting LTE CRS-IM signaling to the NR UE to notify the NR UE of an existence of LTE CRS interference,
wherein after the NR UE receives the LTE CRS-IM signaling, the NR UE determines, based on whether the NR UE has a capability for LTE CRS-IM, whether the NR UE is able to perform LTE CRS-IM, and in case that the NR UE has the capability for LTE CRS-IM, the NR UE performs LTE CRS-IM.

12. The method of claim 11, wherein the determining whether the interference caused by the LTE CRS from the neighboring cell to the NR UE exists comprises:
determining whether the NR UE meets any one of the following three conditions, and in case that the NR UE meets any one of the following three conditions, determining that the interference caused by the LTE CRS from the neighboring cell to the NR UE exists:
condition 1: a serving cell of the NR UE is a dynamic spectrum sharing, DSS, cell, and a neighboring cell of the NR UE is a DSS cell;
condition 2: a serving cell of the NR UE is a DSS cell, and a neighboring cell of the NR UE is an LTE cell; and
condition 3: a serving cell of the NR UE is an NR cell, and a neighboring cell of the NR UE is an LTE cell.

13. An interference mitigation, IM, apparatus, applied to a new radio, NR, user equipment, UE, comprising:
a determining module, used for determining whether an interference caused by a long term evolution, LTE, cell-specific reference signal, CRS, from a neighboring cell exists; and
a mitigating module, used for determining, in case that the interference caused by the LTE CRS from the neighboring cell exists, whether the NR UE is able to perform LTE CRS-IM based on whether the NR UE has a capability for LTE CRS-IM, and performing LTE CRS-IM in case that the NR UE has the capability for LTE CRS-IM.

14. The apparatus of claim 13, wherein the determining module is specifically used for:
determining whether LTE CRS-IM signaling is received; and
in case that the LTE CRS-IM signaling is received, determining that the interference caused by the LTE CRS from the neighboring cell exists,
wherein the LTE CRS-IM signaling is signaling transmitted from a base station to notify the NR UE of the existence of LTE CRS interference.

15. The apparatus of claim 14, wherein the LTE CRS-IM signaling comprises:
first signaling used to indicate that the interference caused by the LTE CRS from the neighboring cell exists, wherein the first signaling comprises one or more of the followings: radio resource control, RRC, signaling, medium access control-control element, MAC-CE, signaling and downlink control information, DCI, signaling;
or,
second signaling used to indicate parameters required for performing LTE CRS-IM, wherein the second signaling comprises RRC signaling.

16. The apparatus of claim 15, wherein the mitigating module, when performing LTE CRS-IM, is specifically used for:
obtaining parameters required for performing LTE CRS-IM;
reconstructing, based on the parameters required for performing LTE CRS-IM, CRS antenna port signal for each CRS antenna port; and
cancelling an interference caused by each CRS antenna port signal from a received physical downlink shared channel, PDSCH, based on a time domain position and a frequency domain position of each CRS antenna port and the CRS antenna port signal for each CRS antenna port.

17. The apparatus of claim 16, wherein the mitigating module, when obtaining the parameters required for performing LTE CRS-IM, is specifically used for:
receiving the first signaling used to indicate that the interference caused by the LTE CRS from the neighboring cell exists, and obtaining, by using blind detection, the parameters required for performing LTE CRS-IM from an LTE broadcast signal from the neighboring cell;
receiving the first signaling used to indicate that the interference caused by the LTE CRS from the neighboring cell exists, and obtaining the parameters required for performing LTE CRS-IM from lte-CRS-PatternList1 and/or lte-CRS-PatternList2 in ServingCellConfig signaling; and
receiving the second signaling used to indicate the parameters required for performing LTE CRS-IM, and obtaining the parameters for LTE CRS-IM from the LTE CRS-IM signaling.

18. The apparatus of claim 16, wherein the parameters required for performing LTE CRS-IM comprise one or more of the followings:
an LTE downlink carrier bandwidth, an LTE carrier center frequency, a physical cell ID of a neighboring interfering cell, the number of CRS antenna ports, a multicast/broadcast single frequency network, MBSFN, configuration, a v-shift.

19. The apparatus of claim 13, further comprising:
a receiving module, used for receiving a physical downlink shared channel, PDSCH, after the mitigating module performs LTE CRS-IM.

20. The apparatus of claim 13, wherein the mitigating module is further used for:
receiving a physical downlink shared channel, PDSCH, in case that the NR UE is unable to perform LTE CRS-IM.

21. The apparatus of claim 13, wherein the mitigating module is further used for:
receiving a physical downlink shared channel, PDSCH, in case that the interference caused by the LTE CRS from the neighboring cell does not exist.

22. The apparatus of claim 13, further comprising a reporting module, used for:
reporting to a base station that whether the NR UE has the capability for LTE CRS-IM.

23. An interference mitigation, IM, apparatus, applied to a base station, comprising:
a notifying module, used for determining whether an interference caused by a long term evolution, LTE, cell-specific reference signal, CRS, from a neighboring cell to a new radio, NR, user equipment, UE, exists, and in case that the interference caused by the LTE CRS from the neighboring cell to the NR UE exists, transmitting LTE CRS-IM signaling to the NR UE to notify the NR UE of an existence of LTE CRS interference,
wherein after the NR UE receives the LTE CRS-IM signaling, the NR UE determines, based on whether the NR UE has a capability for LTE CRS-IM, whether the NR UE is able to perform LTE CRS-IM, and in case that the NR UE has the capability for LTE CRS-IM, the NR UE performs LTE CRS-IM.

24. The apparatus of claim 23, wherein the notifying module, when determining whether the interference caused by the LTE CRS from the neighboring cell to the NR UE exists, is specifically used for:
determining whether the NR UE meets any one of the following three conditions, and in case that the NR UE meets any one of the following three conditions, determining that the interference caused by the LTE CRS from the neighboring cell exists:
condition 1: a serving cell of the NR UE is a dynamic spectrum sharing, DSS, cell, and a neighboring cell of the NR UE is a DSS cell;
condition 2: a serving cell of the NR UE is a DSS cell, and a neighboring cell of the NR UE is an LTE cell; and
condition 3: a serving cell of the NR UE is an NR cell, and a neighboring cell of the NR UE is an LTE cell.

25. An electronic device, comprising a memory storing computer programs, and a processor, wherein the computer programs, when executed by the processor, cause the electronic device to perform the interference mitigation, IM, method according to any one of claims 1 to 10 or the interference mitigation, IM, method of claim 11 or 12.

26. A processor readable storage medium, wherein the processor readable storage medium stores a computer program, and the computer program, when executed by a processor, causes the processor to perform the interference mitigation, IM, method according to any one of claims 1 to 10 or the interference mitigation, IM, method of claim 11 or 12.
